# EUROPÄISCHE PATENTANMELDUNG

(11) **EP 0 815 934 A1**
(43) Veröffentlichungstag der Anmeldung: **07.01.1998**
(21) Anmeldenummer: 97109554.2
(22) Anmeldetag: 12.06.1997
(51) Int. Cl.: B01J 8/10, B01J 19/20, B01F 3/12, B01F 7/16, B01J 19/02, B01F 7/24

(54) **Reaktor für korrosive Reaktionsmischungen**

(30) Priorität: 25.06.1996 DE 19625264
(71) Anmelder: BAYER AG, 51368 Leverkusen (DE)
(72) Erfinder: Zingel, Siegfried, 47807 Krefeld (DE); Burow, Wilfried, Dr., 47809 Krefeld (DE); Anstock, Martin, Dr., 47800 Krefeld (DE); Zeitz, Dieter, Dr., 47802 Krefeld (DE); Schmidt-Park, Olaf, Dr., 47800 Krefeld (DE)

(57) **Zusammenfassung**

Die Erfindung betrifft einen Reaktor (1) für korrosive, abrasive oder hochviskose Reaktionsmischungen, insbesondere zur verfahrenstechnischen Behandlung von Aufschlämmungen abrasiver Feststoffe (20) in flüssiger Reaktionsphase (22), z.B. einer Reaktionsmischung zur Reduktion von organischen Verbindungen mit Metallen.

Der Reaktor (1) weist eine innenliegende vertikale Fördereinrichtung (3) auf, die einen reaktorschonenden, energiesparenden schlaufenförmigen Umlauf des Reaktionsgemisches ermöglicht.

## Beschreibung

Die Erfindung betrifft einen Reaktor für korrosive, hochviskose Reaktionsmischungen, insbesondere zur verfahrenstechnischen Behandlung von Aufschlämmungen abrasiver Feststoffe in flüssiger Reaktionsphase, z.B. einer Reaktionsmischung zur Reduktion von organischen Verbindungen mit Metallen. Der Reaktor weist eine innenliegende vertikale Fördereinrichtung auf, die einen reaktorschonenden Produktumlauf ermöglicht und die Zudosierung von Feststoff im laufenden Verfahren erleichtert.

Bei der verfahrenstechnischen Behandlung und Durchmischung von korrosiven Reaktionsmischungen, welche abrasive Feststoffpartikel enthalten, treten erhebliche Belastungen der Mischwerke oder Reaktoren konventioneller Bauart auf. So werden beispielsweise derartige Reaktoren aus Normalstahl gefertigt, die eine säurefeste Auskleidung und eine Ausmauerung aufweisen müssen.

Die Durchmischung der Reaktionspartner sowie der im Laufe des Verfahrens entstehenden Produkte wird konventionell mit Rührwerken erreicht.

Die flüssigen Reaktionspartner werden üblicherweise vom Reaktorkopf aus durch die Gasphase in den Reaktor zugegeben. Die Feststoffkomponenten, die feinteilig, staubig und abrasiv sein können, werden je nach Prozeß im Reaktor vorgelegt oder im oberen Teil des Reaktors zudosiert, wobei auch der Feststoff zunächst die Gasphase passiert.

Die bekannten Reaktorkonstruktionen weisen aber eine Reihe von erheblichen Mängeln und Nachteilen auf, die zu Einschränkungen bei der Prozeßführung, verminderter Betriebssicherheit der Anlage und hohen Kosten bezüglich Instandhaltung und Wartung führen. Zum Beispiel hält die Werkstoffkombination aus Normalstahl, säurefester Auskleidung und Ausmauerung den abrasiven Reaktionsmischungen nur unzureichend Stand.

Ein weiterer Nachteil ergibt sich z.B. bei exothermen Reaktionen im Reaktor. Die Ausmauerung wirkt sich in solchen Fällen ungünstig aus, weil im Verlauf der jeweiligen Reaktion freiwerdende Reaktionswärme abgeführt werden muß. Bei bekannten Reaktoren mit Ausmauerung ist es unmöglich, Reaktionswärme über die Reaktoroberfläche abzuführen und z.B. zur Energiegewinnung in Form von Dampf oder Heißwasser nutzbar zu machen.

Ein weiterer Nachteil besteht darin, daß eine eventuelle Probenahme nur vom Reaktorkopf aus unter Schwierigkeiten möglich bzw. schlecht reproduzierbar ist.

Die bekannten eingesetzten Rührwerke, meist mehrteilige, komplizierte und kostspielige Konstruktionen aus verschiedenartigen Werkstoffen, sind vergleichsweise verschleißanfällig. Auch ihre Mischwirkung ist insbesondere bei ungünstigem Mischungsverhalten der beteiligten flüssigen, organischen und feststoffhaltigen Phasen stark eingeschränkt.

Werden die flüssigen Reaktionspartner über die Gasphase der Reaktionsmischung zugeleitet, bleibt aufgrund der unterschiedlichen Dichte und Zähigkeit der zu mischenden Phasen ein Teil der zugeleiteten Edukte an der Grenzfläche zur Gasphase liegen und nimmt nicht sofort, u.U. sehr langsam, an der erwünschten Reaktion teil.

Die Zuführung des Feststoffes über die Gasphase hat den Nachteil, daß, insbesondere bei staubenden Feststoffen, feine Partikel mit dem Brüdenstrom ausgetragen werden, die sich an allen unerwünschten Stellen des Reaktors, der Rührwelle oder der nachgeschalteten Stellen des Reaktor absetzen. Solche Ablagerungen entwickeln sich zu äußerst kompakten, widerstandfähigen Anbackungen, die den Produktionsprozeß in ungünstiger Weise beinflussen oder erheblich stören.

Aufgabe der Erfindung war es eine Reaktor- und Mischvorrichtung bereitzustellen, die die genannten Nachteile nicht aufweist, eine höhere Laufzeit bei ggf. erhöhter Standzeit ermöglicht und die es möglich macht, bei entsprechend angepaßter Verfahrenweise, den Eduktdurchsatz zu erhöhen.

Die Aufgabe wird erfindungsgemäß gelöst durch einen Reaktor für korrosive und ggf. hochviskose Reaktionsmischungen, insbesondere zur verfahrenstechnischen Behandlung von Dispersionen abrasiver Feststoffe in flüssiger und/oder hochviskoser Reaktionsphase, bestehend aus einem gegebenenfalls zylindrischen Reaktoroberteil und einem konisch zulaufenden Reaktorunterteil, einer vertikalen Fördereinrichtung, vorzugsweise einem Schneckenmischer, bestehend aus Mantelrohr und Förderschnecke, die im Reaktor senkrecht vom Reaktorkopf des Oberteils hängend angeordnet ist und entgegen der Schwerkraft fördert, wobei das untere Ende der Fördereinrichtung mit seinem Einlaß offen bis in die Konusspitze des Reaktorunterteils ragt und das obere Ende der Fördereinrichtung unterhalb des Reaktordeckels Austrittsöffnungen aufweist, mit einer Zuleitung für flüssige Reaktionspartner und einem Auslaß für die Reaktionsmischung am Boden des Reaktors, mit einem Feststoffeinlaß und gegebenenfalls einem Einlaß bzw. Auslaß für gasförmige Reaktionsstoffe.

Die Reaktorform und die vertikal wirkende Fördereinrichtung, vorzugsweise ein Schneckenmischer, der die Reaktionsmischung senkrecht nach oben fördert, ermöglichen einen Produktumlauf im Reaktor in Form einer vertikalen Kreislaufbewegung.

Der erfindungsgemäße Reaktor kann allseits oder teilweise mit einem Doppelmantel ausgestattet sein, in dem mit Hilfe eines Wärmetauschermediums Wärme mit der Reaktionsmischung ausgetauscht wird.

Weitere bevorzugte Ausführungsformen sind den Unteransprüchen zu entnehmen.

Der vertikale Reaktantkreislauf wird z.B. erzeugt durch einen dynamischen Schneckenmischer mit zentralem Mantelrohr, der die Feststoffe und flüssige viskose Phase vom Reaktorboden zwangsweise bis zum Reaktorkopf fördert und dort ausschleudert. Durch das Einziehen der Produktmasse im unteren Teil des Reaktors und deren Ausschleusung im Oberteil des Reaktors wird eine vertikale Schleifenbewegung des Reaktorinhalts erzeugt.

Die Anwendung eines metallischen Reaktors der erfindungsgemäßen Konstruktion und Form sowie der dazu angepaßte Einsatz eines Schneckenmischers mit ausgewählter Rührtechnik ermöglicht eine Reihe von Vorteilen gegenüber der bisher bekannten Apparatetechnik.

Eine metallische Reaktorkonstruktion ohne Auskleidung behindert nicht die Ausübung von Verfahrensmanipulationen (Zu- und Abführung von Produkt- oder Hilfsstoffen etc.) an den richtigen Positionen und ist von allen Seiten des Reaktors für Veränderungen bzw. Anpassungen des Reaktors zugänglich.

Die metallische Reaktorinnenoberfläche ermöglicht eine zusätzliche Wärmeabfuhr durch Wärmeübertragung (z.B. Heißwassererzeugung in einem zylindrischen Doppelmantel).

Die bei Stoß- und Schlagbeanspruchung rißempfindliche keramische Auskleidung bekannter Reaktoren sowie die darunterliegende Säureschutzgummierung für den Normstahl sind im erfindungsgemäßen Reaktor weggelassen, was eine Verringerung der Investitions- und Reparaturkosten des erfindungsgemäßen Reaktors bewirkt. Zum Schutz vor gegebenenfalls doch nicht zu vermeidenden, aber vermindertem Reibverschleiß (Behälterunterteil als Konus) ist der Einsatz einer auswechselbaren Stahlplattierung aus geeigneen Werkstoffen mit langer Lebensdauer denkbar.

Die bevorzugte Stahlkonstruktion ermöglicht außerdem wesentlich einfacher die Entnahme von Proben aus laufenden Prozessen, weil es keine Einschränkung hinsichtlich des Ortes der Probenahme gibt.

Der Einsatz und die Anwendung vorzugsweise eines Schneckenmischers im erfindungsgemäßen Reaktor ermöglicht ein intensives zwangsweises Mischen der unterschiedlichen Einsatzstoffe durch hohe Scherkräfte in einem ständig zu durchlaufenden Teilbereich des Reaktors. Damit wird eine Phasentrennung, Schichtenausbildung und evtl. Nesterbildung unverbrauchter Reaktanden in einem heterogenen Stoff- und Phasengemisch, wie es bei bekannten Reaktoren immer wieder vorkommt, verhindert.

Der Energiebedarf für den Mischerantrieb wird erheblich vermindert im Vergleich zum konventionellen Rührwerksantrieb, da die Antriebsleistung fast ausschließlich für die zwangsweise Mischung im vertikal nach oben durchlaufenden Mischraum benutzt wird und nur vergleichsweise geringe Reibungsverluste auftreten. Das Reaktionsgemisch wird dabei zwangsweise zum Reaktorkopf transportiert und bewegt sich durch sein Eigengewicht anschließend ohne zusätzlichen Energieaufwand wieder in Richtung Reaktorboden. Die Zuführung von festen und flüssigen Reaktionskomponenten soll im erfindungsgemäßen Reaktor so erfolgen, daß sie unmittelbar zwangsweise nach Einlaß in Kontakt (Reaktionsbeschleunigung, Umsatzsteigerung) geraten und vorzugsweise in einem Schneckenmischer vermischt und transportiert werden. Dasselbe soll für gegebenenfalls anfallendes Rücklaufkondensat gelten, das nicht durch die Gasphase auf den Reaktorinhalt zurückläuft, sondern direkt in die Flüssigphase eingebracht werden kann.

Durch die bevorzugte Zuführung des feinteiligen und staubigen Feststoffes direkt in den Mischraum des Schneckenmischers und damit weg vom Gasraum direkt in die Flüssig-/Feststoffphase wird der entstehende Abgasstrom ganz wesentlich von mitgerissenen Feststoffpartikeln entlastet. Dadurch wird das prozeßstörende Zusetzen der nachgeschalteten Anlagen weitgehend verhindert und Kosten sowie Ausfallzeiten für Repratur- bzw. Reinigungsarbeiten werden vermieden.

Gegenstand der Erfindung ist auch die Verwendung des Reaktors in Prozessen in denen korrosive und/oder hochviskose Reaktionsmischungen und/oder abrasive Feststoffe vorkommen. Zu den vorgenannten Prozessen gehören Reaktionen von organischen Komponenten mit Metallen. Als organische Komponenten kommen z.B. reduzierbare Stoffe wie z.B. aliphatische oder aromatische Carbonsäuren, Aldehyde, Ketone, Nitro- oder Nitrosoverbindungen in Frage, als metallischer Reaktionspartner können Metalle wie z.B. Li, Na, K, Mg, Ca, Al, B, Ti, V, Fe, Cr, Mn, Fe, Co, Ni, Cu, Zn, Si eingesetzt werden.

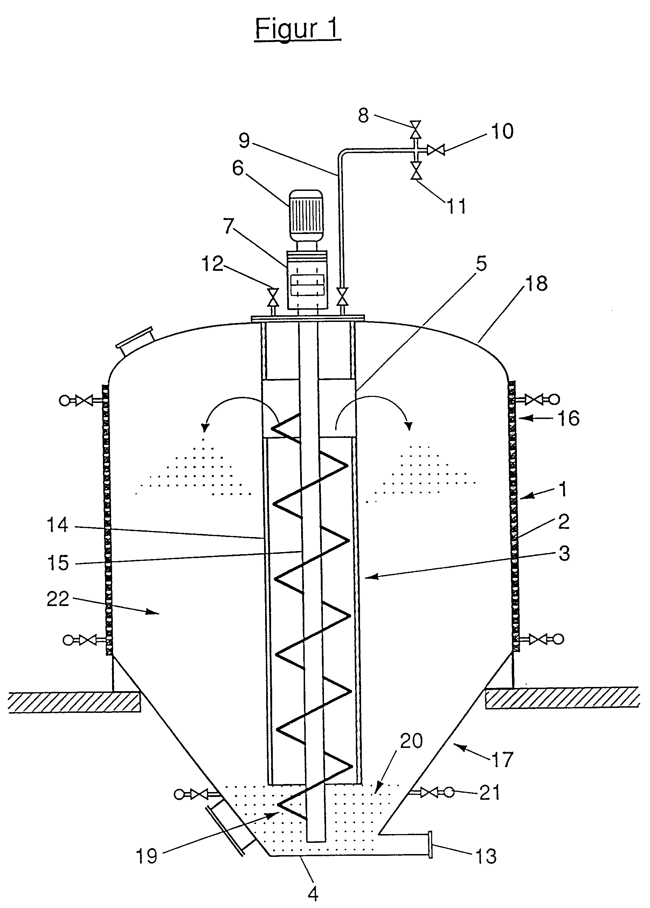

Die Erfindung wird beispielhaft nachstehend anhand der Figur 1 näher erläutert, ohne daß dadurch die Erfindung eingeschränkt ist.

Fig. 1 zeigt einen Längsschnitt durch einen erfindungsgemäßen Reaktor.

In Fig. 1 ist der entsprechend den Anforderungen aus geeigneten metallischen Werkstoffen hergestellte Reaktor 1 dargestellt zusammen mit einigen peripheren Anlageteilen. Der Reaktor 1 besitzt hier einen Doppelmantel 2, insbesondere im zylindrischen Mantelbereich, zur Abführung von Reaktions- und Kondensationswärme. Als Kühlmittel dient Wasser z.B. zur Erzeugung von Warmwasser oder Dampf. Der Reaktor besteht aus einem zylindrischen Oberteil 16 und einem konischen Unterteil 17, wobei Apparatehöhe und -durchmesser aufeinander abgestimmt sind. Der Öffnungswinkel (∼ 75°) der konischen Reaktorspitze, die den Behälterboden bildet, ist so eingestellt, daß der dazu passende Schneckenmischer 3 mit seinem unteren Ende 19, die sich zum Reaktorboden 4 hin bewegenden Feststoffe 20 möglichst vollständig erfaßt und gleichzeitig den gesamten Reaktorinhalt 22 mit bestem Wirkungsgrad umwälzt. Der Schneckenmischer 3 ist im Reaktor 1 zentrisch, senkrechthängend angeordnet und besteht aus einem Mantelrohr 14 und einer dazu passenden Misch-/Transportschnecke 15. Damit die in dem Schneckenmischer 3 vom Reaktorboden 4 zum Reaktorkopf 18 nach oben transportierten Reaktionsprodukte aus dem Mantelrohr 14 austreten können, sind kurz unter dem Reaktorkopf 18 Austrittsöffnungen 5 vorgesehen. Das Mantelrohr 14 ist in den Reaktor eingehängt und von außen mit dem Reaktorkopf 18 verschraubt.

Die Schneckenwendel der Mischschnecke 15 führen bis kurz vor den Reaktorboden 4 und enden oben etwa in Höhe der Austrittsöffnungen 5 im Mantelrohr 14. Der Antrieb des Schneckenmischers 3 erfolgt über einen Motor 6 mit variabler Drehzahl, um die Drehzahl jeweils dem Zähigkeitsverlauf des Reaktionsgemisches bzw. dem Prozeßzustand anpassen zu können. Die dabei notwendige Antriebsleistung für den Schneckenmischer 3 liegt wesentlich unter der bisher erforderlichen elektrischen Leistung für ein herkömmliches Rührwerk. Die während des Reaktionsvorgangs gegebenenfalls ansteigende Viskosität der Eduktaufschlämmung wird über die Zugabe von flüssigen Reaktionspartnern oder Verdünnungsmitteln über den Zulauf 9 limitiert.

Der Schneckenmischer 3 selbst ist durch einen magnetgekuppelten Antrieb 7, evtl. zusätzlich mit Spülung und zusätzlicher Labyrinthdichtung mit dem Antriebsmotor 6 verbunden, so daß das Prinzip des absolut dichten, geschlossenen Reaktors erreicht wird.

Genau wie die Einspeisung von Wasser 8 oder Wasserdampf erfolgt auch die Zuführung der flüssigen organischen Reaktionspartner 10 bzw. des Rücklaufs 11 über einen gemeinsamen Zulauf 9 von oben direkt in den vom Mantelrohr 14 gebildeten Mischraum des Schneckenmischers 3.

Die Reaktionskomponenten werden dadurch direkt von der Mischschnecke 15 erfaßt und intensiv mit den Feststoffen 20, die ebenfalls von oben zudosiert werden, zu einem Brei vermischt, was zu einer Intensivierung bzw. Beschleunigung der Reaktion führt. Die während des Prozesses zuzuführenden Feststoffe 20 werden von oben über den Einlaß 12 direkt in den Schneckenmischer 3 eingegeben, und mit Reaktionsflüssigkeit vermischt, um die sonst auftretende massive Staubentwicklung und daraus resultierende Anbackungen im Reaktorgasraum zu vermeiden.

Zusätzlich zur oberen Einspeisung befinden sich am Reaktorboden 4 (Einlauf zum Boden hin gerichetet) verteilt über den Umfang mehrere Zulaufstutzen 21 für z.B. Wasser, Dampf, flüssige Reaktanden bzw. Hilfsstoffe, die auch gleichzeitig für Spül- und Reinigungszwecke zur Verfügung stehen.

Die Entleerungs des Reaktor 1 erfolgt durch einen seitlich angebrachten Stutzen 13 am Boden 4 des konischen Unterteils 17.

## Patentansprüche

1. Reaktor (1) für korrosive Reaktionsmischungen enthaltend abrasive Feststoffe, bestehend aus einem gegebenenfalls zylindrischen Reaktoroberteil (16) und einem konisch zulaufenden Reaktorunterteil (17), einer vertikalen Fördereinrichtung (3), insbesondere einem Schneckenmischer (3) aus Mantelrohr (14) und Förderschnecke (15), die im Reaktor (1) senkrecht vom Reaktorkopf (18) des Reaktoroberteils (16) hängend angeordnet ist und entgegen der Schwerkraft fördert, wobei das untere Ende (19) der Fördereinrichtung (3) mit seinem Einlaß offen bis in die Konusspitze des Reaktorsunterteils (17) ragt, und das obere Ende der Fördereinrichtung unterhalb des Reaktorkopfes (18) Austrittsöffnungen (5) aufweist, mit einer Zuleitung (9) für flüssige Reaktionspartner, einem Auslaß (13) für die Reaktionsmischung am Reaktorboden (4), mit einem Feststoffeinlaß (12) und gegebenenfalls einem Einlaß bzw. Auslaß für gasförmige Reaktionsstoffe.

2. Reaktor nach Anspruch 1, dadurch gekennzeichnet, daß als Konstruktionswerkstoff für den Reaktor (1) korrosions- und abrasionsbeständiger Sonderstahl verwendet wird, insbesondere Superduplexstahl oder hochlegierter austenitischer Stahl.

3. Reaktor nach den Ansprüchen 1 bis 2, dadurch gekennzeichnet, daß durch die vertikale Fördereinrichtung (3) ein vertikaler schlaufenförmiger Umlauf des Reaktionsgemisches erzeugt wird, der reaktorschonend und energiesparend für den Mischerantrieb ist.

4. Reaktor nach Ansprüchen 1 bis 3, dadurch gekennzeichnet, daß das konische Reaktorunteil (17) einen Öffnungswinkel des Konus von 65° bis 100° aufweist.

5. Reaktor nach den Ansprüchen 1 bis 4, dadurch gekennzeichnet, daß der Feststoffeinlaß von oben direkt in den Mischraum der Fördereinrichtung (3) geführt ist.

6. Reaktor nach den Ansprüchen 1 bis 5, dadurch gekennzeichnet, daß der Zulauf (9) der flüssigen Reaktionspartner von oben direkt in den Mischraum der Fördereinrichtung (3) erfolgt.

7. Reaktor nach Anspruch 1 bis 6, dadurch gekennzeichnet, daß das Reaktoroberteil (16) einen Doppelmantel (2) aufweist, der zum Wärmeaustausch mit dem Reaktor (1) von einem Wärmeübertragungsmittel durchströmt wird.

8. Reaktor nach Anspruch 1 bis 7, dadurch gekennzeichnet, daß die Fördereinrichtung (3) über eine Magnetkupplung mit zusätzlicher Spülung angetrieben wird.

9. Verwendung des Reaktors nach den Ansprüchen 1 bis 8 in Prozessen, deren Komponenten hochviskos und/oder abrasiv und/oder korrosiv sind.

10. Verwendung des Reaktors nach den Ansprüchen 1 bis 8, insbesondere gemäß Anspruch 9, dadurch gekennzeichnet, daß der Reaktor in einem Prozeß zur Reduktion von organischen Komponenten mit Metallen verwendet wird.
